# EUROPEAN PATENT SPECIFICATION

(11) **EP 4 197 204 B1**
(45) Date of publication and mention of the grant of the patent: **25.03.2026**
(21) Application number: 21745293.7
(22) Date of filing: 13.07.2021
(51) Int. Cl.: H04W 4/06

(54) **METHOD AND APPARATUS FOR PROVIDING MULTICAST BROADCAST SERVICE IN A LOCAL SERVICE AREA**
VERFAHREN UND VORRICHTUNG ZUR BEREITSTELLUNG VON MULTICAST-BROADCAST-DIENST IN EINEM LOKALEN DIENSTBEREICH
PROCEDE ET DISPOSITIF PERMETTANT DE FOURNIR UN SERVICE DE MULTICAST-BROADCAST DANS UNE ZONE DE SERVICE LOCALE

(30) Priority: 13.08.2020 WO PCT/CN2020/109010
(43) Date of publication of application: 21.06.2023
(73) Proprietor: Telefonaktiebolaget LM Ericsson (publ), 164 83 Stockholm (SE)
(72) Inventor: LING, Jie, Shanghai, 200335 (CN); RÖNNEKE, Hans, Bertil, 434 34 Kungsbacka (SE); GAN, Juying, Shanghai, 200335 (CN)
(74) Representative: Ericsson
(86) International application number: PCT/EP2021/069444
(87) International publication number: WO 2022/033787

(56) References cited:
- US-A1- 2016 227 385
- US-A1- 2017 339 534
- "3rd Generation Partnership Project; Technical Specification Group Services and System Aspects; Study on architectural enhancements for 5G multicast-broadcast services (Release 17)", no. V0.4.0, 22 June 2020 (2020-06-22), pages 1 - 157, XP051924091, Retrieved from the Internet <URL:ftp://ftp.3gpp.org/Specs/archive/23_series/23.757/23757-040.zip 23757-040_rm.docx> [retrieved on 20200622]

## Description

### TECHNICAL FIELD

The present application generally relates to wireless communication technology. More particularly, the present application relates to a method and an apparatus for providing Multicast Broadcast (MB) service in a local service area. The present application also relates to computer program product adapted for the same purpose. The present application also relates to a terminal device adapted to cooperate with the apparatus for providing MB service in a local service area.

### BACKGROUND

3GPP has developed MBMS (Multicast/Broadcast Multimedia Subsystem) for 3G networks for video multicast/broadcasting and streaming services. For details, see 3GPP TS 23.246 16.1.0, which is incorporated herein by reference in its entirety. Moreover, eMBMS (evolved MBMS) for EPS has been introduced. In Rel-13 and Rel-14, the MBMS system has been updated to support new services such as Public Safety, Cellular Internet of Things (CloT) and Vehicle to Everything (V2X).

The scope of a new Release-17 study in 3GPP SA2 working group covers both multicast requirements and use cases for CloT, Public Safety, V2X etc., and dedicated broadcasting requirements and use cases. The study targets the 5G Release 17 and New Radio (NR) radio access. The development so far has been documented in 3GPP TR 23.757 V0.4.0.

Multicast / Broadcast services are not supported on 5G NR until now. With the enhanced characteristics of the 5G NR, e.g. short delays, higher bandwidth etc., it is believed Mission Critical Services, e.g., Mission Critical Push To Talk, MCPTT, Mission Critical Data, MCData, and Mission Critical Video, MCVideo, as well as VTX services, will exhibit an enhanced and much better performance on 5G NR.

US 2016/227385 discloses a group communication service enabler (GCSE) group management.

US 2017/339534 discloses group communication function for delivering group communication messages in communication networks.

### SUMMARY

Due to the mobility of the termina devices and the complexity in terms of signaling, it is a great challenge to deliver the local MB service in a resource efficient and user-friendly manner, especially In an loT scenario where there are a large number of terminal devices. However, until now, there is no solution for solving the above problems in the art.

One of the objects is to provide methods and apparatus for providing MB service in a local service area, which allows an optimal usage of network resources and better user experience.

According to one aspect of the present disclosure, a method for providing Multicast Broadcast (MB) service in a local service area comprises the following steps carried out by a node configured to manage access and mobility:
- a) determining whether a terminal device joining a MB session associated with the local service area is out of the local service area;
- b) if the terminal device is determined to be out of the local service area, removing the terminal device from the MB session; and
- c) notifying the terminal device that the MB session is unavailable.

According to another aspect of the present disclosure, an apparatus for providing Multicast Broadcast (MB) service in a local service area comprises:
a storage device configured to store a computer program comprising computer instructions; and
a processor coupled to the storage device and configured to execute the computer instructions to perform the method as described above.

According to another aspect of the present disclosure, a method for providing Multicast Broadcast (MB) service in a local service area comprises the following steps carried out by a RAN node:
- a) detecting whether a terminal device joining a MB session associated with the local service area is out of the local service area;
- b) if the terminal device is out of the local service area, removing the terminal device from the MB session; and
- c) notifying a node configured to manage access and mobility that the terminal device is out of the local service area or the terminal device shall be removed from the MB session.

According to another aspect of the present disclosure, a method for providing Multicast Broadcast (MB) service in a local service area comprises the following steps carried out by a RAN node:
- a) receiving from the node configured to manage access and mobility a message that the terminal device is out of the local service area or the terminal device shall be removed from the MB session; and
- b) removing the terminal device from the MB session.

According to another aspect of the present disclosure, an apparatus for providing Multicast Broadcast (MB) service in a local service area comprises:
a storage device configured to store a computer program comprising computer instructions; and
a processor coupled to the storage device and configured to execute the computer instructions to perform the method as described above.

According to another aspect of the present disclosure, a terminal device comprises:
a storage device configured to store a computer program comprising computer instructions; and
a processor coupled to the storage device and configured to execute the computer instructions to:
   from an apparatus for providing Multicast Broadcast (MB) service in a local service area, receive a message that a MB session associated with the local service area is unavailable; and
   terminate or interrupt an execution of a procedure relating to the MB service in the local service area.

According to another aspect of the present disclosure, a computer program product for providing Multicast Broadcast (MB) service in a local service area, the computer program product being embodied in a computer readable storage medium and comprising computer instructions for performing anyone of the methods as described above.

### BRIEF DESCRIPTION OF THE DRAWINGS

The foregoing and other objects, features, and advantages would be apparent from the following more particular description of preferred embodiments as illustrated in the accompanying drawings in which:
Fig. 1 shows a typical 5G system Architecture capable of supporting MBS.
Fig. 2 schematically illustrates a flowchart of a method for providing Multicast Broadcast (MB) service in a local service area according to the present disclosure.
Fig. 3 is a block diagram illustrating an apparatus for providing MB service in a local service area according to the present disclosure.
Fig. 4 schematically illustrates a flowchart of a method for providing Multicast Broadcast (MB) service in a local service area according to the present disclosure.
Fig. 5 schematically illustrates a flowchart of a method for providing Multicast Broadcast (MB) service in a local service area according to the present disclosure.
Fig. 6 is a block diagram illustrating an apparatus for providing MB service in a local service area according to the present disclosure.
Fig. 7 is a block diagram illustrating a terminal device according to the present disclosure.
Fig. 8 schematically illustrates a Session Join procedure for local MB service according to the present disclosure.
Fig. 9 schematically illustrates a Session Start procedure for local MB service according to the present disclosure.
Fig. 10 schematically illustrates a procedure for Inter-gNB Xn Handover according to the present disclosure.
Fig. 11 schematically illustrates a procedure for Inter NG-RAN node N2 based handover, Inter-gNB Xn Handover according to the present disclosure.

### DETAILED DESCRIPTION

The invention can be implemented in numerous ways, including as a process; an apparatus; a system; a composition of matter; a computer program product embodied on a computer readable storage medium; and/or a processor, such as a processor configured to execute instructions stored on and/or provided by a memory coupled to the processor. In this specification, these implementations, or any other form that the invention may take, may be referred to as techniques. In general, the order of the steps of disclosed processes may be altered within the scope of the invention. Unless stated otherwise, a component such as a processor or a memory described as being configured to perform a task may be implemented as a general component that is temporarily configured to perform the task at a given time or a specific component that is manufactured to perform the task. As used herein, the term "processor" refers to one or more devices, circuits, and/or processing cores configured to process data, such as computer program instructions.

The terminology used herein is for the purpose of describing particular embodiments only and is not intended to be limiting. As used herein, the singular forms "a", "an" and "the" are intended to include the plural forms as well, unless the context clearly indicates otherwise. It will be further understood that the terms "comprises" "comprising," "includes" and/or "including" when used herein, specify the presence of stated features, integers, steps, operations, elements, and/or components, but do not preclude the presence or addition of one or more other features, integers, steps, operations, elements, components, and/or groups thereof.

Also, use of ordinal terms such as "first," "second," "third," etc., in the claims to modify a claim element does not by itself connote any priority, precedence, or order of one claim element over another or the temporal order in which acts of a method are performed, but are used merely as labels to distinguish one claim element having a certain name from another element having a same name (but for use of the ordinal term) to distinguish the claim elements.

Unless otherwise defined, all terms (including technical and scientific terms) used herein have the same meaning as commonly understood. It will be further understood that terms used herein should be interpreted as having a meaning that is consistent with their meaning in the context of this specification and the relevant art and will not be interpreted in an idealized or overly formal sense unless expressly so defined herein.

As used herein, the term "terminal device" may be referred to as, for example, device, access terminal, user equipment (UE), mobile station, mobile unit, subscriber station, or the like. It may refer to any end device that can access a wireless communication network and receive services therefrom. By way of example and not limitation, the terminal device may include a portable computer, an image capture terminal device such as a digital camera, a gaming terminal device, a music storage and playback appliance, a mobile phone, a cellular phone, a smart phone, a tablet, a wearable device, a personal digital assistant (PDA), or the like.

In an Internet of things (loT) scenario, a terminal device may represent a machine or other device that performs monitoring and/or measurements, and transmits the results of such monitoring and/or measurements to another terminal device and/or a network equipment. In this case, the terminal device may be a machine-to-machine (M2M) device, which may, in a 3rd generation partnership project (3GPP) context, be referred to as a machine-type communication (MTC) device. Particular examples of such machines or devices may include sensors, metering devices such as power meters, industrial machineries, bikes, vehicles, or home or personal appliances, e.g. refrigerators, televisions, personal wearables such as watches, and so on.

A detailed description of one or more embodiments of the invention is provided below along with accompanying figures that illustrate the principles of the invention. The invention is described in connection with such embodiments. The scope of the invention is limited only by the claims. Numerous specific details are set forth in the following description in order to provide a thorough understanding of the invention. These details are provided for the purpose of example and the invention may be practiced according to the claims without some or all of these specific details. For the purpose of clarity, technical material that is known in the technical fields related to the invention has not been described in detail so that the invention is not unnecessarily obscured.

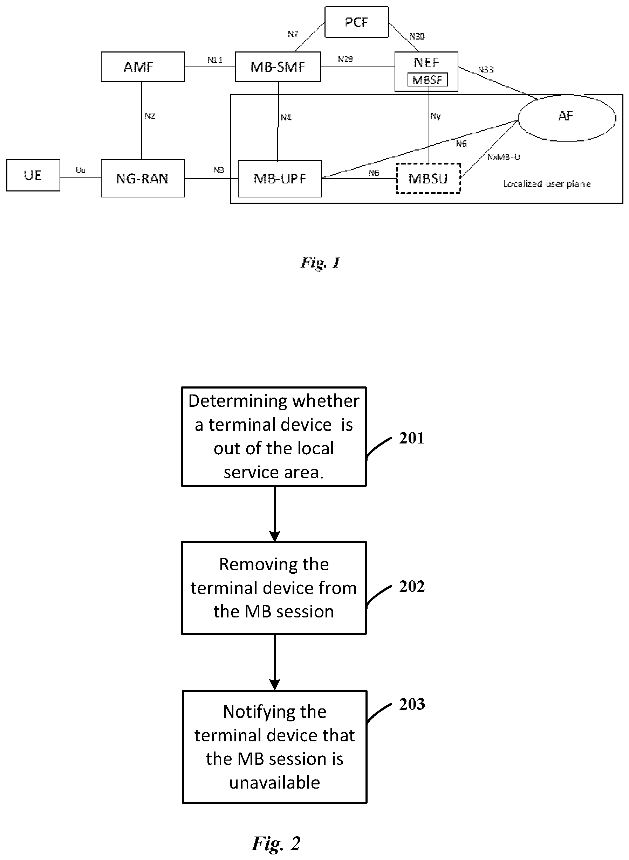

Fig. 1 shows a typical 5G system Architecture capable of supporting MBS. For details, see 3GPP TR 23.757 V0.4.0.

To support multicast/broadcast MBS user service delivery in 5G system, new functional nodes or components and necessary enhancement to the existing entities are deployed. Note that the new functional nodes can be standalone or co-locate with existing network function nodes.

It shall be noted that a node or a functional node can be implemented either as a network element on a dedicated hardware, as a software instance running on a dedicated hardware, or as a virtualised function instantiated on an appropriate platform, e.g. on a cloud infrastructure, or as any combination thereof.

As shown in Fig. 1, the SMF and UPF which have the roles to support MB Sessions are named "MB-SMF" and "MB-UPF", which can simultaneously support both PDU Sessions and MB Sessions, e.g. PDU Sessions and MB Sessions to the same DNN. However, MB-SMF and MB-UPF can also be deployed and configured to exclusively handle MB Sessions.

In the architecture as shown in Fig. 1, enhancement to existing entities and new functional nodes or components are as follows:

User Equipment (UE), New Generation Radio Access Network (NG-RAN), Access and Mobility Management Function (AMF), Session Management Function (SMF), User Plane Function (UPF), Network Exposure Function (NEF) and Policy Control Function (PCF) are enhanced to support MBS.

UE is enhanced to support 5G MBS services.

NG-RAN is enhanced to support Point-to-Multipoint (PTM) and Point-to-Point (PTP) delivery of MBS media. NG-RAN independently controls switching between PTM and PTP for best service quality and resource efficiency.

AMF is enhanced to select MB-SMF and be part of the signaling distribution tree.

MB-SMF is an SMF enhanced to control MB Sessions, signaling with AF (via NEF/MBSF), QoS control using PCF, and provision of MB Session information on request from AMF. The PDU session(s) the UE(s) maintain for individual delivery of an MBS service may be associated with the MB Session managed by the MB-SMF.

MB-UPF is a UPF enhanced with an MBS user plane function.

MBSF (Multicast/Broadcast Service Function) is a function which may be part of NEF or be deployed independently. The MBSF may support TMGI allocation or other MBS signaling for the service level management. The MBSF also provides an interface to the Application Function or content provider and it has an interface to the MBSU. MBSF may perform authorization of the UE to join the MB session.

MBSU (Multicast/Broadcast Service User plane) is a new entity to handle the payload part to cater for the service level functions and management.

NEF is an existing NF, which provides interface to the AF.

PCF is enhanced to handle QoS for MB Sessions, e.g. to authorize the QoS profiles for shared delivery.

Generally, local MB service is required to be delivered in a local service area for a specific period. All the relevant UEs in the local service area can receive the MBS service. When starting a local MB service, an application function needs to be able to notify 5G core network (CN) and NG-RAN of the coverage where the local MB service can be delivered, and thus those UEs outside the area are prevented from being served.

To offer local MBS service, the backhaul delay between 5GC and NG-RAN needs to be minimized. To this end, it is essential to have localized user plane deployment to work together with localized application function. For example, in the architecture as shown in Fig. 1, MB-UPF (and optionally MBSU) and application function are deployed locally (i.e. close to NG-RAN).

However, due to the mobility of the UEs and the complexity in terms of signaling, it is a great challenge to deliver the local MB service in a resource efficient manner. For example, in some cases, a UE successfully joining a MB session may move out from a local service area associated with the MB session. Since this event may occur randomly and may be detected by a number of nodes, it is desirable to have a mechanism for dealing with the occurrence in an efficient and user-friendly manner.

In the present disclosure, an AMF node may determine whether a terminal device, e.g., UE joining a MB session associated with a local service area is out of the local service area, and in response to the occurrence, the AMF node may remove the terminal device from the MB session and send a message, e.g., NAS message MB Session Remove to the terminal device. To this end, the AMF node may detect the event that the terminal device moves out from the local service area, e.g., by comparing a location of the terminal device with location-related criteria for the local service area. Alternatively, the determining may be based on judgement made by other node(s). For example, a RAN node or another AMF node may send to the AMF node a message indicating that the terminal device is out of the local service area or shall be removed from the MB session, on the basis of which the AMF node determines the terminal device is out of the local service area. Preferably, when the AMF node detects that the terminal device moves out from the local service area, it may notify the RAN node that the terminal device is out of the local service area or the terminal device shall be removed from the MB session, e.g., by sending a N2 message MB Session Remove, so that the terminal device will be removed from MB Session in both of 5GC and NG-RAN.

The term "location-related criteria" used herein refers to any standard which the location of a terminal device may be compared with or judged by. The examples of the location-related criteria include but are not limited to Location Criteria specificed in 3GPP TS 23.503 or a service area list.

The following embodiments will be described in connection with the 5G system as shown in Fig.1. However, it can be understood that, although the embodiments herein are described in the context of the 5G system, the embodiments can be also applied to other different telecommunication systems. It will be also understood that, although specific terms are used in the embodiments, the embodiments are not limited to those specific terms but may be applied to all similar entities. For example, the term "RAN node" herein may refer to e.g. access point, base station, macro base station, femto base stations, NodeB (NB), eNodeB (eNB), gNodeB (gNB) and so on.

Fig. 2 schematically illustrates a flowchart of a method for providing Multicast Broadcast (MB) service in a local service area according to the present disclosure.

The flowchart as shown in Fig. 2 comprises the following steps performed by a node configured to manage access and mobility, e.g., AMF node:
Step 201: The AMF node determines whether a terminal device joining a MB session associated with the local service area is out of the local service area.

In an illustrative example, the AMF node may compare a location of the terminal device with location-related criteria for the local service area to determine whether the terminal device is out of the local service area. For a handover scenario, e.g., during a handover from a source RAN node to a target RAN node, the AMF node may respond to a MB Session Command from the target RAN node by comparing a location of the terminal device with location-related criteria for the local service area so as to determine whether the terminal device is out of the local service area.

In another illustrative example, if receiving from a RAN node a message that the terminal device is out of the local service area or the terminal device shall be removed from the MB session, the AMF node will make a judgement that the terminal device is out of the local service area. For example, the AMF node may send to the RAN node a request for setting up MB session resource, which includes the location-related criteria for the local service area so that the RAN node may judge whether the terminal device is out of the local service area or the terminal device shall be removed from the MB session.

In another illustrative example, the location-related criteria is derived from local service area information included in an MB Session announcement or an Allocate Temporary Mobile Group Identity (TMGI) Request sent from an AF node to a NEF/MBSF node.

In another illustrative example, the local service area information is represented as one of the following lists or the combination thereof: a cellld list, a gnodeBld list, a tracking area list, a geographic area list, a civic address list and a service area list.

Step 202: The AMF node removes the terminal device from the MB session if the terminal device is determined to be out of the local service area. In an illustrative example, the removal may be performed by removing an association between the terminal device and MB Session Context. Alternatively, for a handover scenario, the removal may be performed by not sending a MB Session Join message to the target RAN node.

Step 203: The AMF node notifies the terminal device that the MB session is unavailable. Preferably but not necessarily, upon receiving a message or notification that the MB session is unavailable, the terminal device may terminate or interrupt an execution of a procedure relating to the MB service in the local service area.

As described above, the occurrence of moving out from the local service area may be detected by the AMF node. In this case, to remove the terminal device from MB Session in both of 5GC and NG-RAN, the AMF node may notify the RAN node that the terminal device is out of the local service area or the terminal device shall be removed from the MB session. This notifying operation may be performed along with the operation of removing the terminal device at step 202 or the operation of notifying the terminal device at step 203. Moreover, at step 202, it may be performed before, in sychronization with, or after the operation of removing the terminal device, and at step 203, it may be performed before in sychronization with, or after the operation of notifying the terminal device. In an illustrative example, For a handover scenario, e.g., during a handover from a source RAN node to a target RAN node, the AMF node may request a target AMF node to notify the terminal device after the handover or during the handover.

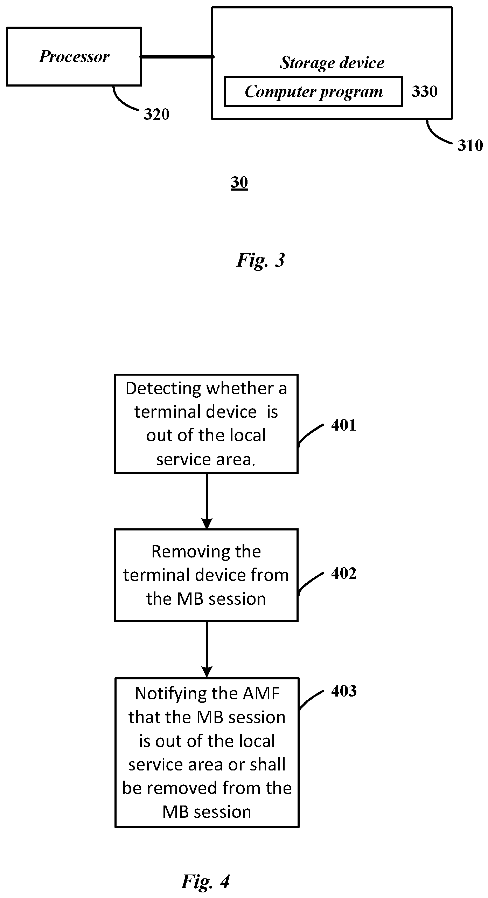

Fig. 3 is a block diagram illustrating an apparatus for providing MB service in a local service area according to the present disclosure.

With reference to Fig. 3, an apparatus 30 comprises a storage device 310 and a processor 320 coupled to the storage device 310. The storage device 310 is configured to store a computer program 330 comprising computer instructions. The processor 320 is configured to execute the computer instructions to perform some or all of the method steps as shown in Fig 2. In this embodiment, the apparatus 20 may be a AMF node.

Fig. 4 schematically illustrates a flowchart of a method for providing Multicast Broadcast (MB) service in a local service area according to the present disclosure.

The flowchart as shown in Fig. 4 comprises the following steps performed by a RAN node:
Step 401: The RAN node detects whether a terminal device joining a MB session associated with the local service area is out of the local service area.

In an illustrative example, the RAN node may compare a location of the terminal device with location-related criteria for the local service area to determine whether the terminal device is out of the local service area. The location-related criteria may be included in a request for setting up MB session resource from the AMF node. For a handover scenario, e.g., during a handover from a source RAN node to a target RAN node, the source RAN node may perform the determining before the handover.

As described above, the location-related criteria may be derived from local service area information included in an MB Session announcement or an Allocate Temporary Mobile Group Identity (TMGI) Request sent from an AF node to a NEF/MBSF node, and the local service area information is represented as one of the following lists or the combination thereof: a cellld list, a gnodeBld list, a tracking area list, a geographic area list, a civic address list and a service area list.

Step 402: The RAN node removes the terminal device from the MB session if the terminal device is determined to be out of the local service area.

Step 403: The RAN node notifies the AMF that the MB session is out of the local service area or shall be removed from the MB session.

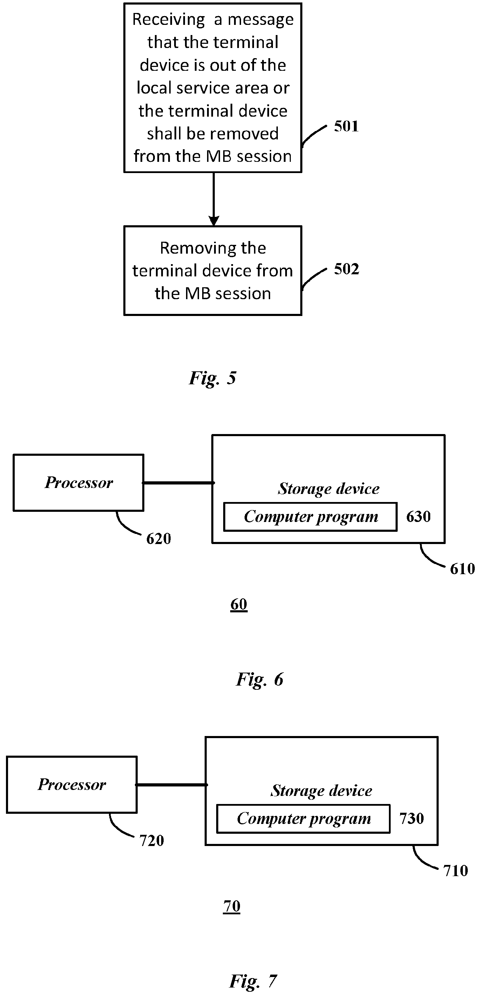

Fig. 5 schematically illustrates a flowchart of a method for providing Multicast Broadcast (MB) service in a local service area according to the present disclosure.

The flowchart as shown in Fig. 5 comprises the following steps performed by a RAN node:
Step 501: The RAN node receives from an AMF node a message that the terminal device is out of the local service area or the terminal device shall be removed from the MB session.
Step 502: The RAN node removes the terminal device from the MB session in response to the even that the terminal device is determined to be out of the local service area.

Fig. 6 is a block diagram illustrating an apparatus for providing MB service in a local service area according to the present disclosure.

With reference to Fig. 6, an apparatus 60 comprises a storage device 610 and a processor 620 coupled to the storage device 610. The storage device 610 is configured to store a computer program 630 comprising computer instructions. The processor 620 is configured to execute the computer instructions to perform some or all of the method steps as shown in Fig 4 or 5.

Fig. 7 is a block diagram illustrating a terminal device according to the present disclosure.

With reference to Fig. 7, a terminal device 70 comprises a storage device 710 and a processor 720 coupled to the storage device 710. The storage device 710 is configured to store a computer program 730 comprising computer instructions. The processor 720 is configured to execute the computer instructions to carry out the following steps:
receiving from an AMF node a message that a MB session associated with the local service area is unavailable, and
terminating or interrupting an execution of a procedure relating to the MB service in the local service area.

Optionally, the processor may be further configured to carry out the step of notifying a user that the procedure is terminated or interrupted.

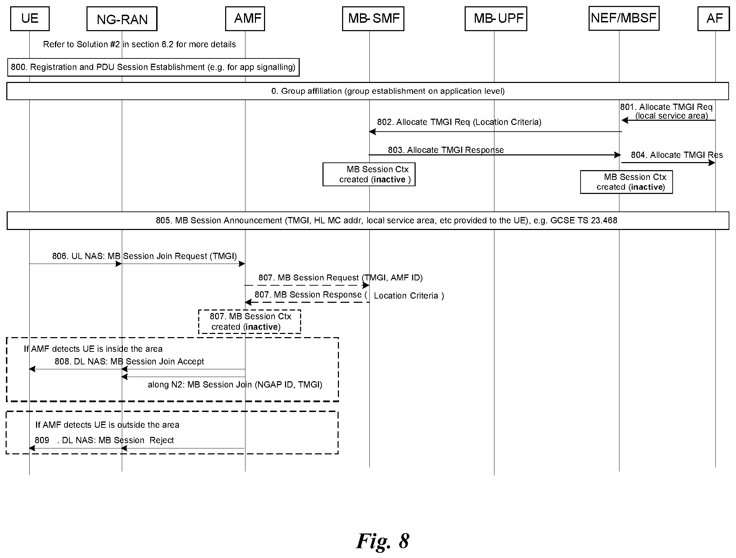

Fig. 8 schematically illustrates a Session Join procedure for local MB service according to the present disclosure.

The Session Join procedure may be used by UEs to inform the 3GPP network of the UE interest in an MB Session.

As shown in Fig. 8, the procedure comprises the following steps:
Step 800: The UE registers and a PDU Session is established. The UE and the AF uses the PDU Session e.g. to signal and establish a group on application level. For details, see 3GPP TS 23.468, which is incorporated herein by reference in its entirety.
Step 801: AF sends Allocate TMGI Request () message to NEF/MBSF to request allocation of a TMGI to identify a new group. In particular, local service area information is additionally included in the Allocate TMGI Request to NEF/MBSF. In an illustrative example, the local service area information can be cellld list, gnodeBld list, tracking area list, geographic area list, civic address list, service area list or the combination thereof. Among them, cellld list, gnodeBld list and tracking area list shall only be used by AFs which reside in trust domain and are aware of such information.
Step 802: NEF/MBSF selects based on local configuration an MB-SMF (if there are multiple) to handle the group and sends an Allocate TMGI Request () message to the MB-SMF. In particular, NEF/MBSF translates the local service area information into Location Criteria, e.g., specified in 3GPP TS 23.503, which is incorporated herein by reference in its entirety. Furthermore, the Location Criteria is included in Allocate TMGI Request to MB-SMF.

Optionally, the MBSF makes the TMGI allocation, stores in the MB Session Context and includes the allocated TMGI in the message to the MB-SMF. The MBSF may have a pre-configured TMGI range for each MB-SMF. The TMGI range should also be configured/registered in the NRF to allow AMFs to discover which MB-SMF is controlling an MB Session identified by a TMGI.

Step 803: MB-SMF allocates a TMGI (optionally pre-allocated TMGI may be used), a Lower Layer Multicast IP Address (LL MC address) for N3, and N6 tunnel information and stores the information in a new MB Session Context set to 'inactive' state. MB-SMF returns the TMGI and the N6 tunnel information to the NEF/MBSF. If MB-SMF makes the TMGI allocation, it may e.g. allocate a TMGI from a pre-configured TMGI range.

Step 804: The NEF/MBSF establishes a new MB Session Context set to 'inactive' state, stores received information and responds to the AF by sending a Allocate TMGI Response (TMGI) message.

Step 805: MB Session Announcement (see e.g., 3GPP TS 23.468, which is incorporated herein by reference in its entirety). The AF informs the members in the group of various group info e.g. TMGI, HL MC Address. In particular, the local service area information is also included in the MB Session announcement. The HL MC address may be allocated by the AF for the group/TMGI.

Step 806: UE indicates its interest to join an MB Session by sending an UL NAS MB Session Join Request (TMGI) message. NG-RAN forwards the NAS message to the AMF. The AMF stores the TMGI in its UE Context. In an illustrative example, if UE determines that it is outside the local service area, it is prohibited from sending MB Session Join Request to AMF.

Step 807: If the AMF does not already have a MB Session Context for the received TMGI, the AMF selects an MB SMF for the TMGI by querying the NRF. A MB Session Request (TMGI, AMF ID) message is sent to the MB SMF to announce the AMF's interest in the MB Session. When the MB-SMF has returned a MB Session Response () message, the AMF creates a MB Session Context in 'inactive' state for the TMGI. In particular, in MB Session Response from MB-SMF to AMF, the Location Criteria should be included for local MBS service.

If AMF detects UE is inside the local service area, the Session Join procedure proceeds to Step 808, otherwise, it proceeds to Step 809.

Step 808: AMF sends MB Session Join Accept to UE, along with a N2 message MB Session Join to NG-RAN.

Step 809: AMF send MB Session Reject to UE to indicate the MB Session Join Request is rejected, with the indication of the reason, e.g., outside the local service area.

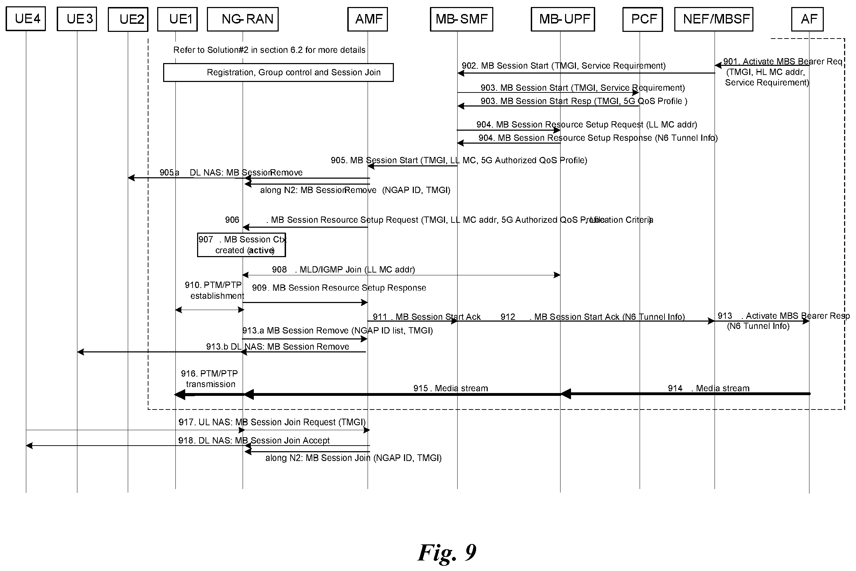

Fig. 9 schematically illustrates a Session Start procedure for local MB service according to the present disclosure.

As shown in Fig. 9, the procedure comprises the following steps:
Step 901: To activate a local MBS Bearer, AF includes additionally the local service area information in the Activate MBS Bearer Request to NEF.
Step 902: NEF/MBSF translates the local service area information into Location Criteria, e.g., specified in 3GPP TS 23.503, which is incorporated herein by reference in its entirety, and includes the Location Criteria in MB Session Start Request to MB-SMF.
Step 903: MB-SMF sends the TMGI for the MB Session and the Service Requirement to the PCF. The PCF returns a 5G QoS Profile, which the MB-SMF uses as the 5G Authorized QoS Profile for the MB Session.
Step 904: The MB-SMF selects the localized MB-UPF based on the Location Criteria to set up the resources.
Step 905: MB-SMF sends MB Session Start messages to all AMFs that has earlier joined the MB Session with the Location Criteria information.
Step 905a: After receiving MB Session Start request from MB-SMF, AMF check whether the joined UEs are within the local service area. For those UEs which are out of the local service area, AMF removes associations between those UEs and MB Session Context. Furthermore, AMF sends NAS MB Session Remove message to those UEs, along with a N2 message MB Session Remove (NGAP ID, TMGI) to inform NG-RAN. As an example, it assumes that AMF detects that UE2 is outside the local service area.
Step 906: AMF shall only send MB Session Resource Setup Request to the relevant RAN nodes in the local service area which have received N2 MB Session Join message from the AMF. The Location Criteria shall be included in the MB Session Resource Setup Request.
Steps 907-910: RAN nodes follow the Location Criteria of the local MB service to establish the downlink resource to deliver contents to the joined UEs within the local service area.
Step 911: AMF sends MB Session Start Ack (TMGI) to the MB-SMF.
Steps 912-913. MB-SMF sends the MB Session Start Ack (TMGI) message to the NEF/MBSF. N6 Tunnel info is included in the response if not already provided to the AF. The NEF/MBSF sends an Activate MBS Bearer Response including the N6 Tunnel Info to the AF.
Step 913a: If RAN detects some joined UEs outside the local service area based on the Location Criteria it received from AMF, it removes those UEs from the MB Session. To remove those UEs, RAN sends N2 message MB Session Remove to AMF with NGAP ID list and TMGI. AMF removes associations between those UEs and MB Session Context.
Step 913b: AMF send NAS MB Session Remove message to those UEs separately. For example, in this procedure, RAN detects UE3 is outside the local service area, AMF send MB Session Remove to UE3.
Steps 914-915: The MB Session is now active. AF starts transmitting the DL media stream using the N6 Tunnel Info, or optionally un-tunneled i.e. as an IP multicast stream using the HL MC address.
Step 916: NG-RAN transmits the received DL media stream using DL PTM or PTP resources.
Steps 917-918. Another UE (e.g., UE4) requests to join the MBS session. AMF checks whether UE 4 is located in the local service area. If UE4 is in the area, AMF accepts the request and inform NG-RAN of the newly joined UE, otherwise if UE4 is not within the area, AMF will reject the MB Session Join from UE4.

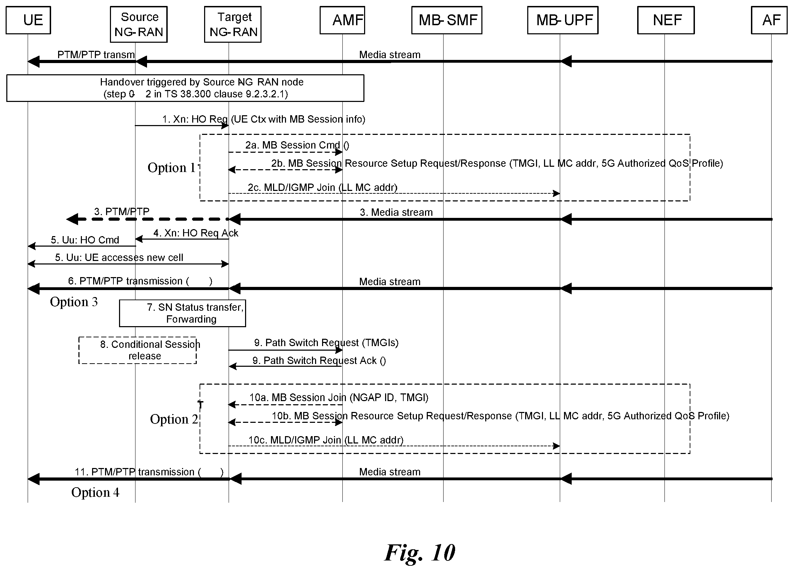

Fig. 10 schematically illustrates a procedure for Inter-gNB Xn Handover according to the present disclosure.

For details on the procedure as shown in Fig. 10, see 3GPP TR 23.757 clause 6.11 "Solution #11: Xn Handover of MB Sessions".

### Case 1

In this case, it assumes that before sending Handover Request to Target NG-RAN (i.e., step 1 of Fig. 10), Source NG-RAN detects an event that UE will not be in the local service area after handover. Upon detecting the event, Source NG-RAN may send N2 message: MB Session Remove to AMF. In response to N2 message, AMF will send NAS message MB Session Remove to UE to remove it from the 5MBS service. Afterwards, the associated MB Session information will be removed from the UE context, and the handover procedure will be performed just like unicast handover.

### Case 2

In Case 2, it assumes that AMF detects an event that UE will not be in the local MBS service area after handover. Upon detecting the event, the following optional procedures are available:

### Option 1

AMF may send N2 message: MB Session Remove to Target NG-RAN after step 2a of Fig. 10. As a response, Target NG-RAN will remove UE from the 5MBS service. As a result, steps 2b, 2c and 3 of Fig. 10 will not be performed or triggered. After completing the handover (i.e., after step 5 of Fig. 10), AMF may send NAS message: MB Session Remove to UE to inform that it is removed from the 5MBS service delivery.

### Option 2

AMF will not trigger send MB Session Join to Target NG-RAN in step 10a of Fig. 10. As a result, steps 10b, 10c and 11 of Fig. 10 will not be triggered. Afterwards, AMF may send NAS message: MB Session Remove to UE to inform that it is removed from the 5MBS service delivery.

### Case 3

In Case 3, it assumes that both of Source NG-RAN and AMF fail to detect that UE is moving out from the local service area until the completion of the handover. Therefore, at step 2b and step 10b of Fig. 10, AMF includes Location Criteria parameter in MB Session Resource Setup Request to Target NG-RAN. If Target NG-RAN detects that UE will not be in the local MBS service area after handover, the following optional procedures are available:

### Option 3

Target NG-RAN sends N2 message: MB Session Remove to AMF after step 2b of Fig. 10. As a result, step 2c and 3 of Fig. 10 will not be triggered. After completing the handover (i.e., after step 5 of Fig. 10), AMF may send NAS message: MB Session Remove to UE to inform that it is removed from the 5MBS service delivery.

### Option 4

Target NG-RAN sends N2 message: MB Session Remove to AMF after step 10b of Fig. 10. As a result, steps 10c and 11 will not be triggered. After completing the handover (i.e., after step 5 of Fig. 10), AMF may send NAS message: MB Session Remove to UE to inform that it is removed from the 5MBS service delivery.

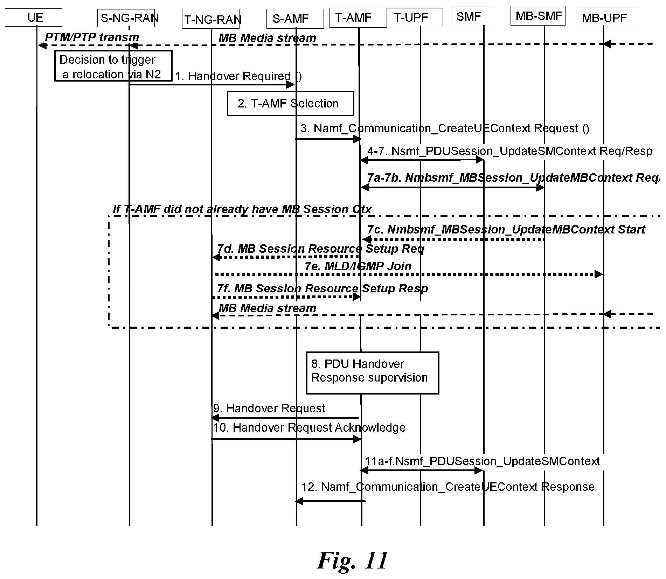

Fig. 11 schematically illustrates a procedure for Inter NG-RAN node N2 based handover, Inter-gNB Xn Handover according to the present disclosure.

For details on the procedure as shown in Fig. 11, see 3GPP TR 23.757 clause 6.12 "Solution #12: N2 Handover of MB Sessions".

### Case 4

In this case, it assumes that before sending Handover Request to Source AMF (i.e., step 1 of Fig. 11), Source NG-RAN detects an event that UE will not be in the local service area after handover. Upon detecting the event, Source NG-RAN may send N2 message: MB Session Remove to Source AMF. In response to N2 message, Source AMF will send NAS message MB Session Remove to UE to remove it from the 5MBS service. Afterwards, the associated MB Session information will be removed from the UE context, and the handover procedure will be performed just like unicast handover.

### Case 5

In this case, it assumes that upon receiving Handover Request after step 1 of Fig. 11, Source AMF detects an event that UE will not be in the local MBS service area after handover. Upon detecting the event, Source AMF should remove the associated MB Session information from UE context, and the handover procedure will be performed just like unicast handover. For the NAS message: MB Session Remove from AMF to UE, Source AMF may send it to UE immediately. Alternatively, Source AMF may transmit a parameter to Target AMF at step 3 Namf_Communication_CreateUEContextRequest (e.g., endUENASRemove) of Fig. 11. Once Target AMF receives the parameter enabled, it should send NAS message: MB Session Remove to UE after the handover procedure (i.e. after step 12 of Fig. 11).

### Case 6

In this case, it assumes that Target AMF detects an event that UE will not be in the local MBS service area after handover. Upon detecting the event, Target AMF should get the Location Criteria in step 7c of Fig. 11 in Nmbsmf_MBSession_UpdateMBContext Start, and after this step, Target AMF can determine that UE will not be in the local MBS service area after handover. After that, Target AMF will remove associated MB Session information from UE context locally, and steps 7d, 7e and 7f of Fig. 11 will not be triggered. After the handover procedure (i.e. after step 12 of Fig. 11), Target AMF should send NAS message: MB Session Remove to UE.

### Case 7

In this case, it assumes that Target NG-RAN detects that UE will not be in the local MBS service area after handover. Upon detecting the event, Target NG-RAN should get the Location Criteria in step 7d of Fig. 11 in MB Session Resource Setup Req. Target NG-RAN should remove associated MB Session info from UE context locally, and send N2 message: MB Session Remove to Target AMF. After the handover procedure (i.e. after step 12 of Fig. 11), Target AMF should send NAS message: MB Session Remove to UE.

It should be noted that the aforesaid embodiments are illustrative instead of restricting, substitute embodiments may be designed by those skilled in the art without departing from the scope of the claims enclosed. The wordings such as "include", "including", "comprise" and "comprising" do not exclude elements or steps which are present but not listed in the description and the claims. It also shall be noted that as used herein and in the appended claims, the singular forms "a", "an", and "the" include plural referents unless the context clearly dictates otherwise. Embodiments can be achieved by means of hardware including several different elements or by means of a suitably programmed computer. In the unit claims that list several means, several ones among these means can be specifically embodied in the same hardware item. The use of such words as first, second, third does not represent any order, which can be simply explained as names.

## Claims

1. A method for providing Multicast Broadcast, MB, service in a local service area in a 5G system, comprising the following steps carried out by an Access and Mobility Management Function, AMF, node configured to manage access and mobility:
- a) determining (201) whether a terminal device (70) joining a MB session associated with the local service area is out of the local service area; and
- b), if the terminal device (70) is determined to be out of the local service area, removing (202) the terminal device (70) from the MB session, wherein the removing comprises removing an association between the terminal device and a MB session context or wherein the removing comprises not sending a MB session join message to a target RAN node; and
- c) notifying (203) the terminal device (70) that the MB session is unavailable.

2. The method according to claim 1, wherein the step -a) comprising:
comparing a location of the terminal device (70) with location-related criteria for the local service area to determine whether the terminal device (70) is out of the local service area.

3. The method according to claim 2, the step -b) or -c) further comprising:
notifying a Radio Access Network, RAN, node that the terminal device (70) is out of the local service area or the terminal device (70) shall be removed from the MB session.

4. The method according to claim 1, wherein the step -a) comprising:
sending to a RAN node a request for setting up MB session resource, the request for setting up MB session resource including location-related criteria for the local service area; and
receiving from the RAN node a message that the terminal device (70) is out of the local service area or the terminal device (70) shall be removed from the MB session.

5. The method according to claim 1, wherein the step -a) comprising:
during a handover from a source RAN node to a target RAN node, in response to a MB Session Command from the target RAN node, comparing a location of the terminal device (70) with location-related criteria for the local service area to determine whether the terminal device (70) is out of the local service area.

6. The method according to claim 5, wherein the step -b) comprising:
prohibiting the terminal device (70) from joining the MB session by not sending a MB Session Join message to the target RAN node.

7. The method according to claim 1, wherein the step -a) comprising:
before a handover from a source RAN node to a target RAN node, receiving from the source RAN node a message that the terminal device (70) is out of the local service area or the terminal device (70) shall be removed from the MB session.

8. The method according to claim 1, wherein the step -a) comprising:
during a handover from a source RAN node to a target RAN node, sending to the target RAN node a request for setting up MB session resource, the request for setting up MB session resource including location-related criteria for the local service area; and
receiving from the target RAN node a message that the terminal device (70) is out of the local service area or the terminal device (70) shall be removed from the MB session.

9. The method according to claim 1, wherein the step -a) comprising:
during a handover from a source RAN node to a target RAN node, comparing a location of the terminal device (70) with location-related criteria for the local service area to determine whether the terminal device (70) is out of the local service area.

10. The method according to claim 9, wherein at the step -c), the notifying is performed by requesting a target node configured to manage access and mobility to notify the terminal device (70) that the MB session is unavailable after the handover or upon determining that the terminal device (70) is out of the local service area; or the notifying is performed by sending to the terminal device (70) a message that the MB session is unavailable.

11. The method according to anyone of claims 2, 4, 5, 8 and 9, wherein the location-related criteria is derived from local service area information included in an MB Session announcement or an Allocate Temporary Mobile Group Identity, TMGI, Request sent from an Application Function, AF, node to a Network Exposure Function/MB Service Function, NEF/MBSF, node; and optionally,
wherein the local service area information is represented as one of the following lists or the combination thereof: a cell ID list, a gNodeB ID list, a tracking area list, a geographic area list, a civic address list and a service area list.

12. An apparatus (30) for providing Multicast Broadcast, MB, service in a local service area in a 5G system, wherein the apparatus (30) is comprised in an Access and Mobility Management Function, AMF, and wherein the apparatus (30) comprises:
a storage device (310) configured to store a computer program (330) comprising computer instructions; and
a processor (320) coupled to the storage device (310) and configured to execute the computer instructions to perform the method according to anyone of claims 1-11.

13. A method for providing Multicast Broadcast, MB, service in a local service area in a 5G system, comprising the following steps carried out by a RAN node
- a) determining (401) whether a terminal device (70) joining a MB session associated with the local service area is out of the local service area; and
- b) if the terminal device (70) is determined to be out of the local service area, removing (402) the terminal device (70) from the MB session; and
- c) notifying (403) a node configured to manage access and mobility that the terminal device (70) is out of the local service area or the terminal device (70) shall be removed from the MB session, wherein the removing comprises removing an association between the terminal device and a MB session context or wherein the removing comprises not sending a MB session join message to a target RAN node.

14. The method according to claim 13, wherein the step -a) comprising:
receiving a request for setting up MB session resource from the node configured to manage access and mobility, the request for setting up MB session resource including location-related criteria for the local service area;
comparing a location of the terminal device (70) with the location-related criteria to determine whether the terminal device (70) is out of the local service area.

15. The method according to claim 13, wherein the step -a) comprising:
before or during a handover from the RAN node to a target RAN node, determining whether the terminal device (70) will be out of the local service area after the handover,
wherein the node configured to manage access and mobility is a source RAN node.

16. The method according to claim 13, wherein the location-related criteria is derived from local service area information included in an MB Session announcement or an Allocate Temporary Mobile Group Identity, TMGI, Request sent from an Application Function, AF, node to a Network Exposure Function/MB Service Function, NEF/MBSF, node; and optionally,
wherein the local service area information is represented as one of the following lists or the combination thereof: a cell ID list, gNodeB ID list, a tracking area list, a geographic area list, a civic address list and a service area list.

17. A method for providing Multicast Broadcast, MB, service in a local service area in a 5G system, comprising the following steps carried out by an RAN node:
- a) receiving (501) from the node configured to manage access and mobility a message that the terminal device (70) is out of the local service area or the terminal device (70) shall be removed from the MB session; and
- b) removing (502) the terminal device (70) from the MB session, wherein the removing comprises removing an association between the terminal device and a MB session context or wherein the removing comprises not sending a MB session join message to a target RAN node.

18. An apparatus (600) for providing Multicast Broadcast, MB, service in a local service area in a 5G system, wherein the apparatus (600) is comprised in a RAN node, the apparatus comprising:
a storage device (610) configured to store a computer program (620) comprising computer instructions; and
a processor (620) coupled to the storage device (610) and configured to execute the computer instructions to perform the method according to anyone of claims 13-17.

## Patentansprüche

1. Verfahren zur Bereitstellung eines Multicast-Broadcast-Diensts, MB-Diensts, in einem lokalen Dienstbereich eines 5G-Systems, umfassend die folgenden Schritte, die von einem Knoten mit Zugangs- und Mobilitätsfunktion, AMF, ausgeführt werden, der dazu konfiguriert ist, Zugang und der Mobilität zu verwalten:
- a) Bestimmen (201), ob sich eine Endgerätevorrichtung (70), die einer MB-Sitzung beitritt, die mit dem lokalen Dienstbereich assoziiert ist, außerhalb des lokalen Dienstbereichs befindet; und
- b) falls bestimmt wird, dass sich die Endgerätevorrichtung (70) außerhalb des lokalen Dienstbereichs befindet, Entfernen (202) der Endgerätevorrichtung (70) aus der MB-Sitzung, wobei das Entfernen Entfernen einer Zuordnung zwischen der Endgerätevorrichtung und einem MB-Sitzungskontext umfasst oder wobei das Entfernen Nichtsenden einer MB-Sitzungsbeitrittsnachricht an einen Ziel-RAN-Knoten umfasst; und
- c) Benachrichtigen (203) der Endgerätevorrichtung (70), dass die MB-Sitzung nicht verfügbar ist.

2. Verfahren nach Anspruch 1, wobei Schritt a) Folgendes umfasst:
Vergleichen eines Standorts der Endgerätevorrichtung (70) mit standortbezogenen Kriterien für den lokalen Dienstbereich, um zu bestimmen, ob sich die Endgerätevorrichtung (70) außerhalb des lokalen Dienstbereichs befindet.

3. Verfahren nach Anspruch 2, wobei Schritt b) oder c) ferner Folgendes umfasst:
Benachrichtigen eines Funkzugangsnetzwerkknotens, RAN-Knotens, dass sich die Endgerätevorrichtung (70) außerhalb des lokalen Dienstbereichs befindet oder die Endgerätevorrichtung (70) aus der MB-Sitzung entfernt werden soll.

4. Verfahren nach Anspruch 1, wobei Schritt a) Folgendes umfasst:
Senden einer Anforderung zum Aufbauen einer MB-Sitzungsressource an einen RAN-Knoten, wobei die Anforderung zum Aufbauen der MB-Sitzungsressource standortbezogene Kriterien für den lokalen Dienstbereich umfasst; und
Empfangen einer Nachricht von dem RAN-Knoten, dass sich die Endgerätevorrichtung (70) außerhalb des lokalen Dienstbereichs befindet oder die Endgerätevorrichtung (70) aus der MB-Sitzung entfernt werden soll.

5. Verfahren nach Anspruch 1, wobei Schritt a) Folgendes umfasst:
während einer Übergabe von einem Quell-RAN-Knoten an einen Ziel-RAN-Knoten in Reaktion auf einen MB-Sitzungsbefehl von dem Ziel-RAN-Knoten Vergleichen eines Standorts der Endgerätevorrichtung (70) mit standortbezogenen Kriterien für den lokalen Dienstbereich, um zu bestimmen, ob sich die Endgerätevorrichtung (70) außerhalb des lokalen Dienstbereichs befindet.

6. Verfahren nach Anspruch 5, wobei Schritt b) Folgendes umfasst:
Verbieten der Endgerätevorrichtung (70), der MB-Sitzung beizutreten, indem keine MB-Sitzungsbeitrittsnachricht an den Ziel-RAN-Knoten gesendet wird.

7. Verfahren nach Anspruch 1, wobei Schritt a) Folgendes umfasst:
vor einer Übergabe von einem Quell-RAN-Knoten an einen Ziel-RAN-Knoten Empfangen einer Nachricht von dem Quell-RAN-Knoten, dass sich die Endgerätevorrichtung (70) außerhalb des lokalen Dienstbereichs befindet oder die Endgerätevorrichtung (70) aus der MB-Sitzung entfernt werden soll.

8. Verfahren nach Anspruch 1, wobei Schritt a) Folgendes umfasst:
während einer Übergabe von einem Quell-RAN-Knoten an einen Ziel-RAN-Knoten Senden einer Anforderung zum Aufbauen einer MB-Sitzungsressource an einen RAN-Knoten, wobei die Anforderung zum Aufbauen der MB-Sitzungsressource standortbezogene Kriterien für den lokalen Dienstbereich umfasst; und
Empfangen einer Nachricht von dem Ziel-RAN-Knoten, dass sich die Endgerätevorrichtung (70) außerhalb des lokalen Dienstbereichs befindet oder die Endgerätevorrichtung (70) aus der MB-Sitzung entfernt werden soll.

9. Verfahren nach Anspruch 1, wobei Schritt a) Folgendes umfasst:
während einer Übergabe von einem Quell-RAN-Knoten an einen Ziel-RAN-Knoten Vergleichen eines Standorts der Endgerätevorrichtung (70) mit standortbezogenen Kriterien für den lokalen Dienstbereich, um zu bestimmen, ob sich die Endgerätevorrichtung (70) außerhalb des lokalen Dienstbereichs befindet.

10. Verfahren nach Anspruch 9, wobei in Schritt c) das Benachrichtigen erfolgt, indem ein Zielknoten, der dazu konfiguriert ist, Zugang und Mobilität zu verwalten, nach der Übergabe oder bei Bestimmen, dass sich die Endgerätevorrichtung (70) außerhalb des lokalen Dienstbereichs befindet, aufgefordert wird, die Endgerätevorrichtung (70) zu benachrichtigen, dass die MB-Sitzung nicht verfügbar ist; oder das Benachrichtigen erfolgt, indem eine Nachricht an die Endgerätevorrichtung (70) gesendet wird, dass die MB-Sitzung nicht verfügbar ist.

11. Verfahren nach einem Ansprüche 2, 4, 5, 8 und 9, wobei die standortbezogenen Kriterien von Informationen bezüglich des lokalen Dienstbereichs abgeleitet werden, die in einer MB-Sitzungsankündigung oder einer Anforderung zum Zuweisen einer temporären Mobilfunkgruppenidentität, TMGI, umfasst sind, die von einem Anwendungsfunktionsknoten, AF-Knoten, an einen Knoten mit Netzwerkdarlegungsfunktion/MB-Dienstfunktion, NEF/MBSF, gesendet wird; und optional
wobei die Informationen bezüglich des lokalen Dienstbereichs als eines von den folgenden Listen oder der Kombination davon dargestellt werden: eine Zell-ID-Liste, eine gNodeB-ID-Liste, eine Liste von Verfolgungsbereichen, eine Liste geografischer Gebiete, eine Liste von Hausadressen und eine Liste von Dienstbereichen.

12. Einrichtung (30) zum Bereitstellen eines Multicast-Broadcast-Diensts, MB-Diensts, in einem lokalen Dienstbereich eines 5G-Systems, wobei die Einrichtung (30) in einem Knoten mit Zugangs- und Mobilitätsfunktion, AMF, umfasst ist und wobei die Einrichtung (30) Folgendes umfasst:
eine Speichervorrichtung (310), die zum Speichern eines Computerprogramms (330) konfiguriert ist, das Computeranweisungen umfasst; und
einen Prozessor (320), der mit der Speichervorrichtung (310) gekoppelt und dazu konfiguriert ist, die Computeranweisungen auszuführen, um das Verfahren nach einem der Ansprüche 1-11 durchzuführen.

13. Verfahren zur Bereitstellung eines Multicast-Broadcast-Diensts, MB-Diensts, in einem lokalen Dienstbereich eines 5G-Systems, umfassend die folgenden Schritte, die von einem RAN-Knoten ausgeführt werden:
- a) Bestimmen (401), ob sich eine Endgerätevorrichtung (70), die einer MB-Sitzung beitritt, die mit dem lokalen Dienstbereich assoziiert ist, außerhalb des lokalen Dienstbereichs befindet; und,
- b) falls bestimmt wird, dass sich die Endgerätevorrichtung (70) außerhalb des lokalen Dienstbereichs befindet, Entfernen (402) der Endgerätevorrichtung (70) aus der MB-Sitzung; und
- c) Benachrichtigen (403) eines Knotens, der dazu konfiguriert ist, Zugang und Mobilität zu verwalten, dass sich die Endgerätevorrichtung (70) außerhalb des lokalen Dienstbereichs befindet oder die Endgerätevorrichtung (70) aus der MB-Sitzung entfernt werden soll, wobei das Entfernen Entfernen einer Zuordnung zwischen der Endgerätevorrichtung und einem MB-Sitzungskontext umfasst oder wobei das Entfernen Nichtsenden einer MB-Sitzungsbeitrittsnachricht an einen Ziel-RAN-Knoten umfasst.

14. Verfahren nach Anspruch 13, wobei Schritt a) Folgendes umfasst:
Empfangen einer Anforderung zum Aufbauen einer MB-Sitzungsressource von dem Knoten, der dazu konfiguriert ist, Zugang und Mobilität zu verwalten, wobei die Anforderung zum Aufbauen der MB-Sitzungsressource standortbezogene Kriterien für den lokalen Dienstbereich umfasst;
Vergleichen eines Standorts der Endgerätevorrichtung (70) mit den standortbezogenen Kriterien für den lokalen Dienstbereich, um zu bestimmen, ob sich die Endgerätevorrichtung (70) außerhalb des lokalen Dienstbereichs befindet.

15. Verfahren nach Anspruch 13, wobei Schritt a) Folgendes umfasst:
vor oder während einer Übergabe von dem RAN-Knoten an einen Ziel-RAN-Knoten Bestimmen, ob sich die Endgerätevorrichtung (70) nach der Übergabe außerhalb des lokalen Dienstbereich befindet,
wobei der Knoten, der dazu konfiguriert ist, Zugang und Mobilität zu verwalten, ein Quell-RAN-Knoten ist.

16. Verfahren nach Anspruch 13, wobei die standortbezogenen Kriterien von Informationen bezüglich des lokalen Dienstbereichs abgeleitet werden, die in einer MB-Sitzungsankündigung oder einer Anforderung zum Zuweisen einer temporären Mobilfunkgruppenidentität, TMGI, umfasst sind, die von einem Anwendungsfunktionsknoten, AF-Knoten, an einen Knoten mit Netzwerkdarlegungsfunktion/MB-Dienstfunktion, NEF/MBSF, gesendet wird; und optional
wobei die Informationen bezüglich des lokalen Dienstbereichs als eines von den folgenden Listen oder der Kombination davon dargestellt werden: eine Zell-ID-Liste, eine gNodeB-ID-Liste, eine Liste von Verfolgungsbereichen, eine Liste geografischer Gebiete, eine Liste von Hausadressen und eine Liste von Dienstbereichen.

17. Verfahren zur Bereitstellung eines Multicast-Broadcast-Diensts, MB-Diensts, in einem lokalen Dienstbereich eines 5G-Systems, umfassend die folgenden Schritte, die von einem RAN-Knoten ausgeführt werden:
- a) Empfangen (501) einer Nachricht von dem Knoten, der dazu konfiguriert ist, Zugang und Mobilität zu verwalten, dass sich die Endgerätevorrichtung (70) außerhalb des lokalen Dienstbereichs befindet oder die Endgerätevorrichtung (70) aus der MB-Sitzung entfernt werden soll; und
- b) Entfernen (502) der Endgerätevorrichtung (70) aus der MB-Sitzung, wobei das Entfernen Entfernen einer Zuordnung zwischen der Endgerätevorrichtung und einem MB-Sitzungskontext umfasst oder wobei das Entfernen Nichtsenden einer MB-Sitzungsbeitrittsnachricht an einen Ziel-RAN-Knoten umfasst.

18. Einrichtung (600) zum Bereitstellen eines Multicast-Broadcast-Diensts, MB-Diensts, in einem lokalen Dienstbereich eines 5G-Systems, wobei die Einrichtung (600) in einem RAN-Knoten umfasst ist, wobei die Einrichtung Folgendes umfasst:
eine Speichervorrichtung (610), die zum Speichern eines Computerprogramms (620) konfiguriert ist, das Computeranweisungen umfasst; und
einen Prozessor (620), der mit der Speichervorrichtung (610) gekoppelt und dazu konfiguriert ist, die Computeranweisungen auszuführen, um das Verfahren nach einem der Ansprüche 13-17 durchzuführen.

## Revendications

1. Procédé de fourniture de service multicast-broadcast, MB, dans une zone de desserte locale dans un système 5G, comprenant les étapes suivantes réalisées par un nœud de fonction de gestion d'accès et de mobilité, AMF, configuré pour la gestion d'accès et de mobilité :
- a) la détermination (201) si un dispositif terminal (70) adhérant à une session MB associée à la zone de desserte locale se trouve en dehors de la zone de desserte locale ; et
- b) s'il est déterminé que le dispositif terminal (70) se trouve en dehors de la zone de desserte locale, le retrait (202) du dispositif terminal (70) de la session MB, dans lequel le retrait comprend le retrait d'une association entre le dispositif terminal et un contexte de session MB ou dans lequel le retrait comprend le fait de ne pas envoyer de message d'adhésion à une session MB à un nœud RAN cible ; et
- c) la notification (203) au dispositif terminal (70) que la session MB est indisponible.

2. Procédé selon la revendication 1, dans lequel l'étape -a) comprend :
la comparaison d'un emplacement du dispositif terminal (70) à des critères liés à l'emplacement pour la zone de desserte locale afin de déterminer si le dispositif terminal (70) se trouve en dehors de la zone de desserte locale.

3. Procédé selon la revendication 2, dans lequel l'étape -b) ou -c) comprend en outre :
la notification à un nœud de réseau d'accès radio, RAN, que le dispositif terminal (70) se trouve en dehors de la zone de desserte locale ou que le dispositif terminal (70) doit être retiré de la session MB.

4. Procédé selon la revendication 1, dans lequel l'étape -a) comprend :
l'envoi, à un nœud RAN, d'une demande de configuration de ressource de session MB, la demande de configuration de ressource de session MB incluant des critères liés à l'emplacement pour la zone de desserte locale ; et
la réception, depuis le nœud RAN, d'un message indiquant que le dispositif terminal (70) se trouve en dehors de la zone de desserte locale ou que le dispositif terminal (70) doit être retiré de la session MB.

5. Procédé selon la revendication 1, dans lequel l'étape -a) comprend :
au cours d'un transfert intercellulaire d'un nœud RAN source à un nœud RAN cible, en réponse à une commande de session MB provenant du nœud RAN cible, la comparaison d'un emplacement du dispositif terminal (70) à des critères liés à l'emplacement pour la zone de desserte locale afin de déterminer si le dispositif terminal (70) se trouve en dehors de la zone de desserte locale.

6. Procédé selon la revendication 5, dans lequel l'étape -b) comprend :
l'interdiction au dispositif terminal (70) d'adhérer à la session MB en n'envoyant pas de message d'adhésion à une session MB au nœud RAN cible.

7. Procédé selon la revendication 1, dans lequel l'étape -a) comprend :
avant un transfert intercellulaire d'un nœud RAN source à un nœud RAN cible, la réception, depuis le nœud RAN source, d'un message que le dispositif terminal (70) se trouve en dehors de la zone de desserte locale ou que le dispositif terminal (70) doit être retiré de la session MB.

8. Procédé selon la revendication 1, dans lequel l'étape -a) comprend :
au cours d'un transfert intercellulaire d'un nœud RAN source à un nœud RAN cible, l'envoi, au nœud RAN cible, d'une demande de configuration de ressource de session MB, la demande de configuration de ressource de session MB incluant des critères liés à l'emplacement pour la zone de desserte locale ; et
la réception, depuis le nœud RAN cible, d'un message indiquant que le dispositif terminal (70) se trouve en dehors de la zone de desserte locale ou que le dispositif terminal (70) doit être retiré de la session MB.

9. Procédé selon la revendication 1, dans lequel l'étape -a) comprend :
au cours d'un transfert intercellulaire d'un nœud RAN source à un nœud RAN cible, la comparaison d'un emplacement du dispositif terminal (70) à des critères liés à l'emplacement pour la zone de desserte locale afin de déterminer si le dispositif terminal (70) se trouve en dehors de la zone de desserte locale.

10. Procédé selon la revendication 9, dans lequel, à l'étape -c), la notification est réalisée par la demande, à un nœud cible configuré pour la gestion d'accès et de mobilité, de notifier, au dispositif terminal (70), que la session MB est indisponible après le transfert intercellulaire ou à la détermination que le dispositif terminal (70) se trouve à l'extérieur de la zone de desserte locale ; ou la notification est réalisée par l'envoi, au dispositif terminal (70), d'un message indiquant que la session MB est indisponible.

11. Procédé selon l'une quelconque des revendications 2, 4, 5, 8 et 9, dans lequel les critères liés à l'emplacement sont dérivés d'informations de zone de desserte locale incluses dans une annonce de session MB ou dans une demande d'allocation d'identité de groupe mobile temporaire, TMGI, envoyée depuis un nœud de fonction d'application, AF, à un nœud de fonction d'exposition de réseau/fonction de desserte MB, NEF/MBSF ; et facultativement
dans lequel les informations de zone de desserte locale sont représentées comme l'une des listes suivantes ou leur combinaison : une liste d'identifiants de cellules, une liste d'identifiants de gNodeB, une liste de zones de suivi, une liste de zones géographiques, une liste d'adresses civiques et une liste de zones de desserte.

12. Appareil (30) de fourniture de service multicast-broadcast, MB, dans une zone de desserte locale dans un système 5G, dans lequel l'appareil (30) est compris dans une fonction de gestion d'accès et de mobilité, AMF, et dans lequel l'appareil (30) comprend :
un dispositif de stockage (310) configuré pour stocker un programme informatique (330) comprenant des instructions informatiques ; et
un processeur (320) couplé au dispositif de stockage (310) et configuré pour exécuter les instructions informatiques pour réaliser le procédé selon l'une quelconque des revendications 1 à 11.

13. Procédé de fourniture de service multicast-broadcast, MB, dans une zone de desserte locale dans un système 5G, comprenant les étapes suivantes réalisées par un nœud RAN :
- a) la détermination (401) si un dispositif terminal (70) adhérant à une session MB associée à la zone de desserte locale se trouve en dehors de la zone de desserte locale ; et
- b) s'il est déterminé que le dispositif terminal (70) se trouve en dehors de la zone de desserte locale, le retrait (402) du dispositif terminal (70) de la session MB ; et
- c) la notification (303), à un nœud configuré pour la gestion d'accès et de mobilité, que le dispositif terminal (70) se trouve en dehors de la zone de desserte locale ou que le dispositif terminal (70) doit être retiré de la session MB, dans lequel le retrait comprend le retrait d'une association entre le dispositif terminal et un contexte de session MB ou dans lequel le retrait comprend le fait de ne pas envoyer de message d'adhésion à une session MB à un nœud RAN cible.

14. Procédé selon la revendication 13, dans lequel l'étape -a) comprend :
la réception d'une demande de configuration de ressource de session MB depuis le nœud configuré pour la gestion d'accès et de mobilité, la demande de configuration de ressource de session MB incluant des critères liés à l'emplacement pour la zone de desserte locale ;
la comparaison d'un emplacement du dispositif terminal (70) aux critères liés à l'emplacement pour déterminer si le dispositif terminal (70) se trouve en dehors de la zone de desserte locale.

15. Procédé selon la revendication 13, dans lequel l'étape -a) comprend :
avant ou pendant un transfert intercellulaire du nœud RAN à un nœud RAN cible, la détermination si le dispositif terminal (70) se trouvera en dehors de la zone de desserte locale après le transfert intercellulaire,
dans lequel le nœud configuré pour la gestion d'accès et de mobilité est un nœud RAN source.

16. Procédé selon la revendication 13, dans lequel les critères liés à l'emplacement sont dérivés d'informations de zone de desserte locale incluses dans une annonce de session MB ou dans une demande d'allocation d'identité de groupe mobile temporaire, TMGI, envoyée depuis un nœud de fonction d'application, AF, à un nœud de fonction d'exposition de réseau/fonction de desserte MB, NEF/MBSF ; et facultativement
dans lequel les informations de zone de desserte locale sont représentées comme l'une des listes suivantes ou leur combinaison : une liste d'identifiants de cellules, une liste d'identifiants de gNodeB, une liste de zones de suivi, une liste de zones géographiques, une liste d'adresses civiques et une liste de zones de desserte.

17. Procédé de fourniture de service multicast-broadcast, MB, dans une zone de desserte locale dans un système 5G, comprenant les étapes suivantes réalisées par un nœud RAN :
- a) la réception (501), depuis le nœud configuré pour la gestion d'accès et de mobilité, d'un message indiquant que le dispositif terminal (70) se trouve en dehors de la zone de desserte locale ou que le dispositif terminal (70) doit être retiré de la session MB ; et
- b) le retrait (502) du dispositif terminal (70) de la session MB, dans lequel le retrait comprend le retrait d'une association entre le dispositif terminal et un contexte de session MB ou dans lequel le retrait comprend le fait de ne pas envoyer de message d'adhésion à une session MB à un nœud RAN cible.

18. Appareil (600) de fourniture de service multicast-broadcast, MB, dans une zone de desserte locale dans un système 5G, dans lequel l'appareil (600) est compris dans un nœud RAN, l'appareil comprenant :
un dispositif de stockage (610) configuré pour stocker un programme informatique (620) comprenant des instructions informatiques ; et
un processeur (620) couplé au dispositif de stockage (610) et configuré pour exécuter les instructions informatiques pour réaliser le procédé selon l'une quelconque des revendications 13 à 17.
